# FASCICULE DE BREVET EUROPEEN

(11) **EP 3 641 966 B1**
(45) Date de publication et mention de la délivrance du brevet: **09.06.2021**
(21) Numéro de dépôt: 18730399.5
(22) Date de dépôt: 19.06.2018
(51) Int. Cl.: B22F 3/105, G05B 19/401, B33Y 50/02, B23K 26/70, B29C 64/393, B23K 26/04, B29C 64/264

(54) **CALIBRATION DE LA FOCALISATION D'UNE SOURCE DE RAYONNEMENT DE PUISSANCE D'UN APPAREIL DE FABRICATION ADDITIVE**
KALIBRIERUNG DES FOKUS EINER LEISTUNGSSTRAHLUNGSQUELLE EINER VORRICHTUNG ZUR GENERATIVEN FERTIGUNG
CALIBRATING THE FOCUS OF A POWER RADIATION SOURCE OF AN ADDITIVE MANUFACTURING DEVICE

(30) Priorité: 19.06.2017 FR 1755572
(43) Date de publication de la demande: 29.04.2020
(73) Titulaire: Addup, 63118 Cebazat (FR)
(72) Inventeur: ROBLIN, Alexandre, 63118 Cebazat (FR); NICAISE, Jean-Pierre, 63118 Cebazat (FR); NOVIKOFF, Ivan, 63118 Cebazat (FR)
(74) Mandataire: Barascou, Frédéric
(86) Numéro de dépôt international: PCT/EP2018/066274
(87) Numéro de publication internationale: WO 2018/234312

(56) Documents cités:
- CN-A- 101 823 181
- DE-B3-102015 224 963
- US-A1- 2014 333 931
- US-A1- 2015 100 149

## Description

La présente invention est relative à la fabrication additive sélective.

Plus particulièrement, elle concerne la calibration de la focalisation d'une source de rayonnement de puissance d'un appareil de fabrication additive.

### DOMAINE TECHNIQUE GÉNÉRAL ET ART ANTÉRIEUR

La fabrication additive sélective consiste à réaliser des objets tridimensionnels par consolidation de zones sélectionnées sur des strates successives de matériau pulvérulent (poudre métallique, poudre de céramique). Les zones consolidées correspondent à des sections successives de l'objet tridimensionnel. La consolidation se fait, couche par couche, par une fusion sélective totale ou partielle réalisée avec une source de rayonnement focalisé, telle qu'une source optique (laser de forte puissance par exemple) ou encore une source de faisceau de particules (par exemple un faisceau d'électrons - technologie dite EBM ou « Electron Beam Melting » selon la terminologie anglo-saxonne généralement utilisée dans le domaine).

On se réfère dans la suite principalement aux sources optiques (telles qu'utilisées dans les technologies SLM ou « Selective Laser Melting » selon la terminologie anglo-saxonne).

Elle trouve toutefois application avec tout autre type de rayonnement.

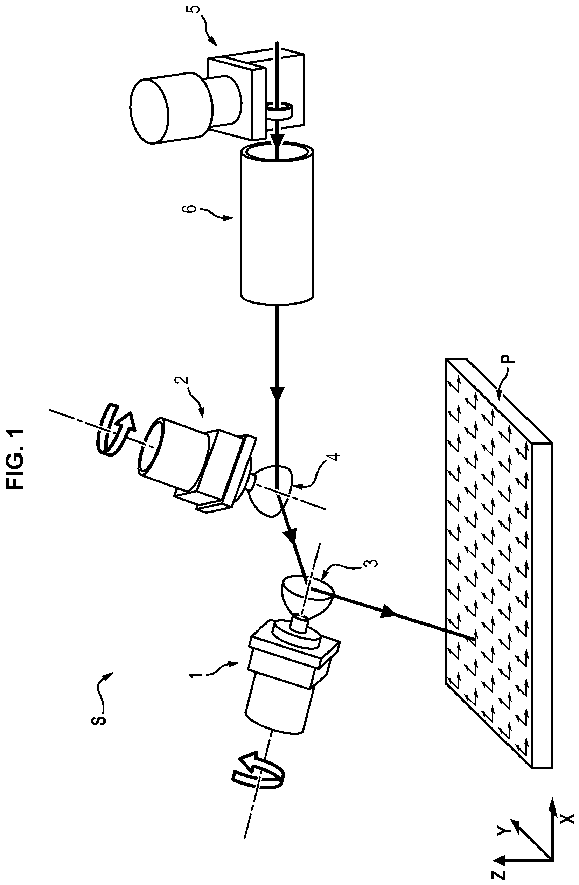

Classiquement, ainsi qu'illustré sur la figure 1, les appareils de fabrication additive de type à source optique utilisent des systèmes S de tête trois axes à trois galvanomètres pour permettre une précision accrue d'une part de la position du point d'impact sur la couche de matériau pulvérulent et d'autre part de la focalisation du faisceau au niveau de ladite couche.

Deux galvanomètres 1, 2 sont utilisés pour guider en rotation deux miroirs 3, 4 et permettre de contrôler la trajectoire du faisceau en sortie de la tête, afin de contrôler le positionnement du point d'impact du faisceau sur le lit de poudre (plan de travail P) (commande en X et en Y).

Par ailleurs, un module DFM (« Dynamic Focusing Module » selon la terminologie anglo-saxonne) - comportant un galvanomètre, un module de translation et une lentille - permet, en jouant sur la translation de ladite lentille, de parfaitement ajuster la distance de focalisation du faisceau au niveau du lit de poudre (commande en Z). Sur la figure 1, on a également représenté un module objectif 6 qui introduit une focalisation fixe, le module DFM 5 permettant la modification de la focalisation se trouvant en amont.

On comprend en effet que plus le faisceau laser est correctement focalisé au niveau du lit de poudre, plus l'énergie transmise au point de fusion est importante et maîtrisée.

On notera néanmoins qu'un tel système S de tête trois axes implique deux principaux types de déformation au niveau du lit de poudre (plan P).

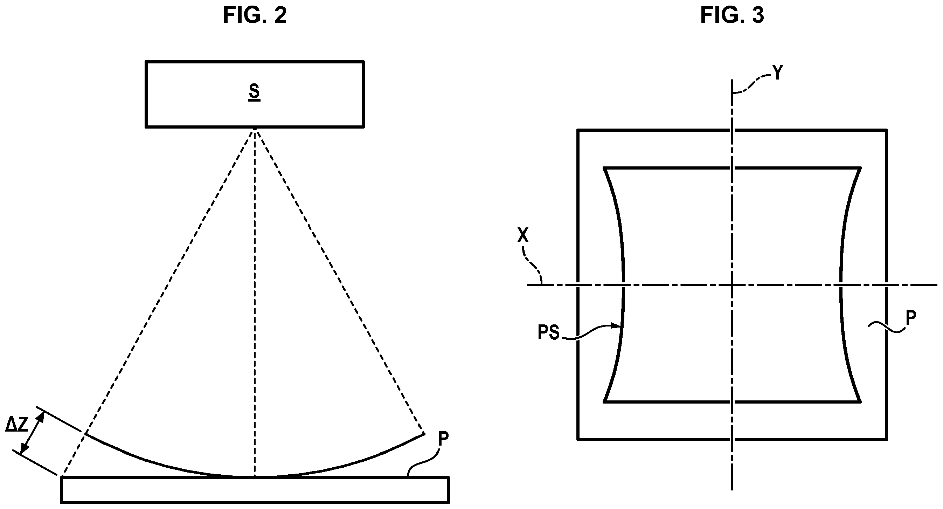

Tout d'abord, la focalisation au niveau du plan de travail P où se situe le lit de poudre varie selon l'inclinaison du faisceau optique. Comme l'illustre en effet la figure 2, l'inclinaison du faisceau résulte des variations de longueur de chemin optique (schématisées par ΔZ sur la figure), ces variations étant elles-mêmes à ajouter aux phénomènes dus aux jeux induits par les miroirs ou encore par la traversée des différentes vitres qui peuvent être prévues dans l'appareil de fabrication additive.

En l'absence de traitement de ce décalage géométrique, la focalisation sur l'ensemble du plan de travail P n'est donc pas constante.

Par ailleurs, on observe classiquement sur le plan de travail P une déformation non linéaire en X et en Y des figures des points d'impact (déformation dite « pillow-shaped » selon la terminologie anglo-saxonne généralement utilisée - forme PS de la figure 3). Cette déformation est due à la géométrie du chemin optique, notamment à la position des miroirs et optiques et à leur distance par rapport au plateau P.

Il est classiquement connu de corriger les commandes des têtes pour tenir compte des distorsions en X et en Y.

On utilise à cet effet des tables de corrections dédiées préalablement déterminées.

Ces tables fournissent des différentiels de commande dont on corrige les entrées de commande de la tête trois axes. Les tirs et balayages du plan de travail P par le faisceau optique se font ainsi avec des positions en X et Y corrigées par rapport au lit de poudre.

Il est connu, pour déterminer ces tables de correction, d'utiliser des plateaux de calibration qui portent des repères de référence. On met en œuvre sur des positions cibles prédéterminées du plateau des séquences de tirs optiques. Un système de mesure à caméra relève la position de ces marquages par rapport aux repères de référence.

Les différentiels entre les positions des marquages ainsi réalisés sur le plateau de calibration et les positions de tirs qui étaient théoriquement ciblées sont utilisés pour calculer les corrections à appliquer aux commandes en X et en Y du système de tête de faisceau optique.

Un exemple en ce sens est par exemple décrit dans le brevet EP1048441 ou encore dans les demandes de brevet US2015/0100149 et US 2014/0333931.

Dans EP1048441 notamment, on utilise pour la calibration d'une part un plateau portant les repères de référence et d'autre part une feuille destinée à recevoir les marquages.

Le plateau est à cet effet divisé en deux zones : l'une qui reçoit la feuille sensible au faisceau optique, l'autre - non recouverte par ladite feuille - qui porte les repères de référence.

La demande de brevet CN 101 823 181 propose de déterminer la focalisation d'un faisceau laser par une discrimination de la morphologie de tirs optiques.

Toutefois, les traitements proposés ne permettent aucunement une optimisation de la focalisation du faisceau sur le lit de poudre.

En outre, les corrections réalisées en X et en Y ne sont pas optimales.

Bien entendu, comme on le comprendra aisément, des problématiques de calibration similaires se posent également avec d'autres sources de rayonnement (source EBM par exemple).

### PRÉSENTATION GÉNÉRALE DE L'INVENTION

Un but de l'invention est de proposer une solution de calibration automatique permettant l'optimisation de la correction du tir.

Notamment, un but de l'invention est de proposer une solution permettant la calibration de la focalisation de la source (calibration en Z).

Un autre but de l'invention est de proposer une solution de calibration permettant une meilleure calibration en X et en Y que dans l'art antérieur.

Ainsi, l'invention propose un procédé de calibration d'un système de tête d'une source de rayonnement de puissance d'un appareil de fabrication additive selon la revendication 1 dans lequel, pour déterminer une correction à appliquer aux commandes dudit système, on met en œuvre les étapes suivantes :
- positionnement dans l'appareil de fabrication additive d'un plateau de calibration présentant une pluralité de repères de référence,
- commande de la source pour marquer sur le plateau de calibration au moins un motif de calibration formé de plusieurs points d'impact,
- acquisition d'au moins une image dudit motif de calibration et d'au moins un repère de référence,
- détermination d'au moins une commande corrigée en fonction de la ou des images ainsi obtenues.

La détermination d'une commande corrigée met en œuvre une détermination, sur une image acquise, de la répartition des diamètres des points d'impact du motif de calibration qui apparait dans ladite image, ladite commande corrigée étant fonction de ladite répartition des diamètres des points d'impact et étant une commande de focalisation.

Un tel procédé est avantageusement complété par les différentes caractéristiques suivantes prises seules ou selon toutes leurs combinaisons techniquement possibles :
- lors de la commande de la source, différents tirs correspondant à différents points d'impact sont générés avec des commandes de focalisation différentes ;
- lors de la commande de la source, différents tirs correspondant à différents points d'impact sont générés avec des commandes de focalisation incrémentées pour que les diamètres aient une répartition gaussienne autour du point milieu du motif ;
- la détermination de la commande de focalisation corrigée met en œuvre, en fonction de la répartition des diamètres des points d'impacts, une détermination d'un point d'impact de plus petit diamètre ou d'un point « waist » extrapolé ;
- la commande corrigée associée au point milieu d'un marquage est la commande de focalisation pour ledit point d'impact ainsi déterminé ou la commande extrapolée qui correspond audit point « waist » extrapolé ;
- le motif de calibration que forment les points d'impact est matriciel et la valeur de commande de focalisation augmente colonne après colonne et ligne après ligne ;
- la source est commandée avec le système de tête pour réaliser sur le plateau de calibration un marquage d'une pluralité de motifs de calibration théoriquement centrés sur des points cibles théoriques prédéterminés ;
- lors de l'étape d'acquisition, un équipement de mesure optique est déplacé sur le plateau de calibration pour acquérir, pour chaque repère de référence du plateau de calibration, au moins une image d'une zone dans laquelle se trouve d'une part ledit repère de référence et d'autre part la position cible théorique à proximité immédiate ;
- pour chaque repère de référence, la ou les images acquises est/sont traitées pour en déduire la position du point d'impact de plus petit diamètre ou d'un point « waist » extrapolé dans un repère orthonormé dudit repère de référence et déterminer le décalage entre la position dudit point et la position cible théorique et dans lequel on détermine une correction complémentaire en fonction de ce décalage ;
- pour la détermination d'une correction, on met en œuvre un traitement pour le passage d'un repère du plateau de calibration à un repère lié à la tête ;
- ledit traitement met en œuvre l'identification de motifs correspondants à deux repères de référence donnés sur le plateau de calibration et la détermination, à partir de ladite identification, d'un décalage en translation et d'une rotation angulaire entre le repère du plateau de calibration et un repère lié à la tête.

Selon un autre aspect également, l'invention propose un ensemble pour la calibration d'un système de tête d'une source de rayonnement de puissance d'un appareil de fabrication additive comportant :
- un plateau de calibration présentant une pluralité de repères de référence,
- un support de tir en au moins un matériau sensible au rayonnement de la source,
ce support laissant apparents les repères de référence du plateau de calibration lorsqu'il est en place sur celui-ci,
caractérisé en ce que le support de tir comporte une pluralité de fenêtres réparties sur celui-ci pour se superposer aux différents repères de référence du plateau de calibration et les laisser apparents lorsque le support de tir est en place sur le plateau de calibration.

### PRÉSENTATION DES FIGURES

D'autres caractéristiques et avantages de l'invention ressortiront encore de la description qui suit, laquelle est purement illustrative et non limitative, et doit être lue en regard des figures annexées sur lesquelles :
- la figure 1 est une représentation schématique de la chaîne optique d'une tête trois axes d'une source d'émission laser d'un appareil de fabrication sélective ;
- les figures 2 et 3 illustrent les principales déformations en l'absence de correction sur un tel dispositif ;
- la figure 4a illustre schématiquement un exemple d'ensemble de calibration (kit) conforme à l'invention, la figure 4b détaillant quant à elle les éléments de l'ensemble optique de cet ensemble de calibration ;
- la figure 5 est une représentation schématique illustrant la superposition d'un plateau de calibration et d'un support de tir ;
- la figure 6 illustre schématiquement un support à rails à double axe sur lequel est destiné à être monté l'équipement de mesure de l'ensemble de la figure 4a ;
- la figure 7 illustre l'image dans le champ de mesure de la caméra de l'ensemble de la figure 4a ;
- la figure 8a illustre les points d'impacts sur le support de tir au niveau d'un motif de calibration ;
- la figure 8b illustre une répartition gaussienne des points d'impact et la détermination d'un point « waist » extrapolé ;
- la figure 9 illustre différentes étapes d'une mise en œuvre possible pour le procédé de l'invention ;
- la figure 10 illustre un support de tir présentant les impacts de différents motifs de tirs ;
- les figures 11 à 14 illustrent le traitement pour le passage du repère du plateau au repère de tête ;
- la figure 15 illustre l'image dans le champ de mesure de la caméra d'un ensemble de calibration conforme à l'invention.

### DESCRIPTION D'UN OU PLUSIEURS MODES DE MISE EN ŒUVRE ET DE RÉALISATION

### Ensemble de calibration

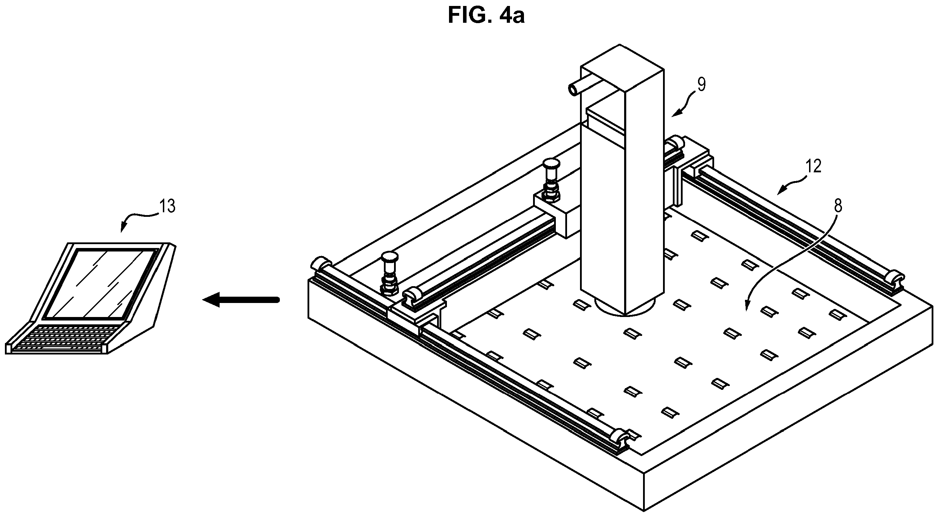

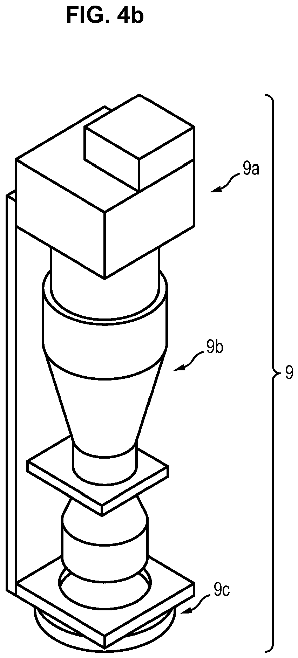

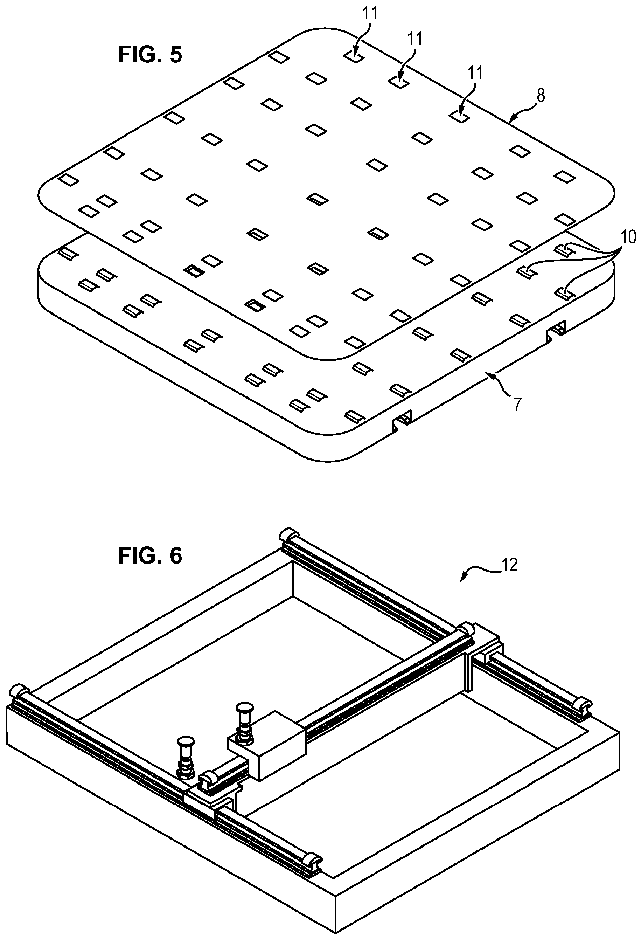

L'ensemble de calibration des figures 4a, 4b et 5 est un kit qui comporte un plateau de calibration de référence 7 et un support de tir 8.

Il comporte également un équipement de contrôle 9 à capteur optique.

Le plateau de référence 7 est une plaque sur laquelle sont portés de façon apparente une pluralité de repères de référence 10. De préférence, les repères de référence 10 sont présents sur les deux faces du plateau de référence 7, afin que celui-ci puisse être retourné et utilisé sur ses deux faces.

Ces repères de référence 10 sont répartis sur l'ensemble du plateau selon des positions connues et contrôlées. A titre d'exemple, ils peuvent être situés proches de points d'une matrice 65x65 destinée à être balayée en tout ou partie par la source de rayonnement de puissance lors de la calibration. D'autres répartitions sont bien entendu possibles.

En chaque point de référence, le marquage apparent du repère 10 est défini par deux axes orthogonaux, dont l'intersection correspond au point de référence et qui définissent sur le plateau un repère orthonormé.

Le support de tir 8 est optionnel. Dans un premier mode de réalisation, il n'y a pas de support de tir 8. De préférence, le plateau de référence 7 est une plaque de verre, qui peut présenter une épaisseur comprise entre 0,1 mm et 10 mm, de préférence de 1 mm.

Dans un deuxième mode de réalisation, le support de tir 8 est présent, et est constitué par un feuillard en un matériau sensible au faisceau de rayonnement.

Ce support 8 est de mêmes dimensions en X et en Y que le plateau 7 et se positionne sur celui-ci lors des tirs de calibration.

Ce support 8 présente une pluralité de fenêtres 11 réparties de la même façon que les repères de référence 10 sur le plateau 7. Lorsque le support de tir 8 est en place sur le plateau 7, les fenêtres 11 sont centrées sur les repères de référence 10 qui sont donc apparents.

L'équipement 9 comporte une caméra 9a de type CMOS ou CCD, un objectif optique 9b et un système d'éclairage spécifique 9c.

Le système d'éclairage spécifique 9c est par exemple constitué par un anneau de diodes électroluminescentes. La caméra 9a et l'objectif 9b permettent une image d'une résolution autorisant des mesures avec une tolérance proche du micromètre.

Cet équipement 9 est par exemple intégré à l'appareil d'impression sélective.

En variante, il peut n'être mis en place à l'intérieur de celui-ci que lors des phases de calibration.

Il est prévu dans l'appareil de fabrication par impression sélective un support 12 de rails à double axes tel que représenté sur la figure 6 qui reçoit l'équipement 9 et la caméra 9a. Ce système 12 permet le guidage manuel ou automatisé en X et en Y de l'équipement 9 et de la caméra 9a au-dessus du plateau de calibration 7 et du support 8 si celui-ci est présent.

Les différentes images recueillies sont traitées par un calculateur 13 pour en déduire les mesures décrites ci-après. Ce calculateur 13 est par exemple le calculateur de l'appareil d'impression sélective. Il peut également être un calculateur qui est distinct de celui de l'appareil d'impression sélective et qui échange avec celui-ci.

### Mesure des défauts

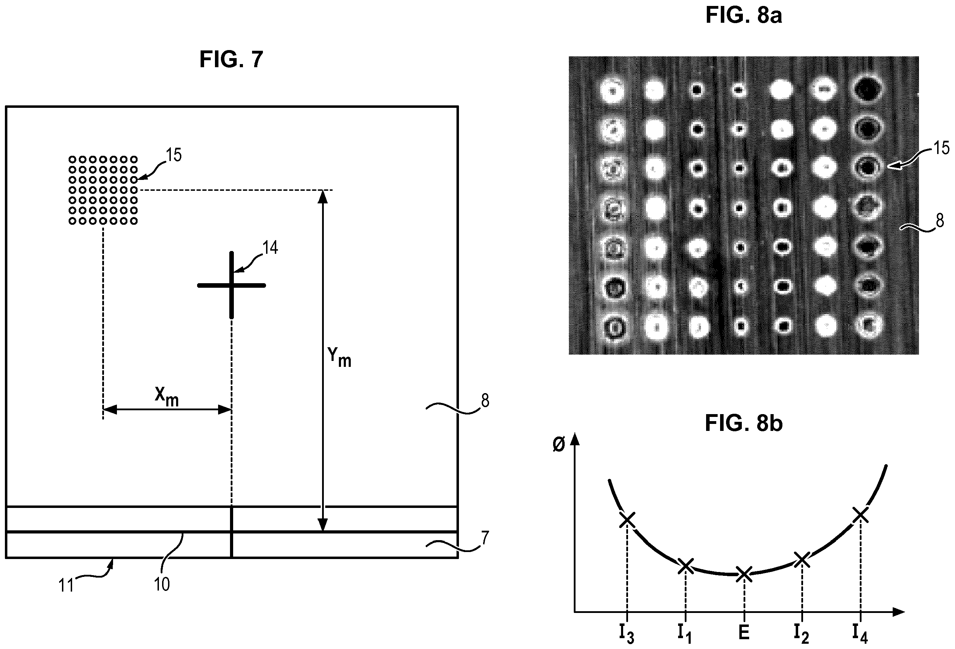

Lors d'une calibration, la caméra 9a acquiert pour chacun des différents repères de référence 10 une image sur laquelle apparait le marquage orthonormé qui correspond audit repère 10 (figure 7).

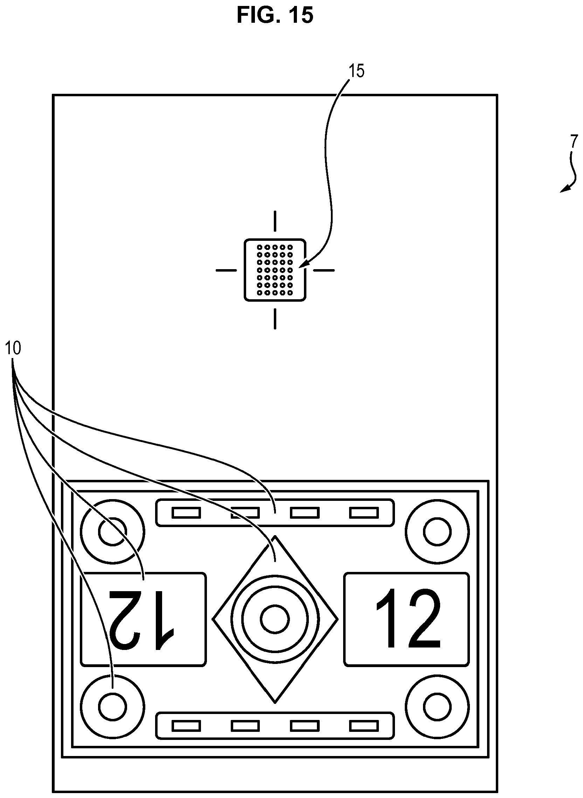

Le marquage correspondant au repère 10 du plateau de référence 7 peut, comme illustré en figure 15, présenter plusieurs éléments de différentes tailles et de différentes formes afin d'améliorer la précision du repérage, et peut mentionner le numéro de plateau de référence 7.

Dans le deuxième mode de réalisation, les marquages de chacun des repères de référence 10 sont laissés visibles grâce aux fenêtres 11 du support de tir 8, qui peuvent être par exemple des ouvertures rectangulaires, d'autres formes étant bien entendu possibles.

Un tel marquage de référence 10 définit sur le plateau de calibration 7 un repère orthonormé de mesure qui sert de référence à la caméra 9b.

Préalablement à l'acquisition des images, la source et son système S de tête ont été commandés pour réaliser, pour chaque repère de référence 10, un tir sur une position cible théorique donnée à proximité du repère de référence 10 correspondant.

Dans le premier mode de réalisation, ce tir est effectué directement sur le plateau de référence 7. Dans le deuxième mode de réalisation, ce tir est effectué sur le support 8.

Un marquage de position cible peut être effectué sur le plateau de référence 7 à proximité de la position cible théorique donnée, afin d'améliorer le repérage de la position du tir et donc la précision de la calibration. Comme illustré en figure 15, le marquage de position cible peut être centré sur la position cible théorique donnée. Il peut constituer en un carré encadrant la position cible théorique donnée du tir, le carré pouvant être entouré d'une croix formée de traits horizontaux et verticaux.

Le tir se fait selon une succession de plusieurs points de tirs répartis selon un motif de tir prédéfini (motif matriciel 15 de 7x7 points dans l'exemple de la figure 7).

Sur la figure 7, la position cible théorique (non visible) correspond à la croix 14.

A l'issue des tirs de motifs, des images sont acquises autour de chaque marquage de référence 10.

Pour chacun de ces marquages 10, l'image acquise de la zone autour de celui-ci est traitée par le calculateur 13 pour en déduire la position du centre (point milieu) du motif de tir 15 dans le repère orthonormé dudit marquage 10 (mesures de position Xm et Ym) et par conséquent le décalage de cette position par rapport à la position cible théorique 14.

Par ailleurs, comme l'illustre la figure 8a, les tirs aux différents points du motif 15 sont commandés pour générer différents diamètres aux points d'impact dudit motif.

Par exemple, plusieurs de ces tirs sont générés avec différentes commandes en Z, c'est-à-dire avec des commandes de focalisation différente. Typiquement, la commande en Z de ces différents tirs est incrémentée d'un point à un autre pour obtenir théoriquement une répartition gaussienne autour du point milieu du motif.

Dans l'exemple sur la figure 8a, la répartition gaussienne est une répartition avec un axe de symétrie en Y.

En variante, cette répartition peut être gaussienne à la fois en X et en Y (répartition selon une gaussienne à deux dimensions).

Un exemple de répartition d'incrémentations est donné par le tableau suivant. Le motif de tir est matriciel et la valeur de commande en Z augmente colonne après colonne (en l'occurrence de gauche à droite) et ligne après ligne (du bas vers le haut).

| | | | | | | |
|---|---|---|---|---|---|---|
| .... | .... | -4 Δ | +3 Δ | .... | .... | .... |
| .... | .... | -5 Δ | +2 Δ | +4 Δ | .... | .... |
| .... | .... | -6 Δ | + Δ | +3 Δ | .... | .... |
| .... | .... | -7 Δ | 0 | + Δ | .... | .... |
| .... | .... | -8 Δ | - Δ | -3 Δ | .... | .... |
| .... | .... | -9 Δ | -2 Δ | +5 Δ | .... | .... |
| .... | .... | .... | -3 Δ | +4 Δ | .... | .... |

Le point central d'incrément 0 correspond au point milieu du motif, tandis que Δ correspond à la valeur d'incrément unitaire de commande en Z. Dans le cas (donné uniquement à titre d'exemple) d'une matrice de tirs 7x7, il est ainsi possible de tester 49 valeurs de commande en Z.

Une fois le motif généré, le traitement mis en œuvre par le calculateur 13 analyse la répartition des diamètres des points d'impact et détermine en fonction de cette répartition le point de la zone du motif qui correspond au « waist ».

Ce point « waist » correspond à un point d'impact de plus petit diamètre ou à un point extrapolé en fonction des courbes de répartition des diamètres des points d'impacts.

Dans l'exemple illustré sur la figure 8a, on a représenté différents points d'impact I1 à I4 et une courbe G qui est la gaussienne passant au mieux par ces points.

Le point extrapolé est le point E correspondant au minimum de ladite gaussienne G.

La commande en Z pour le point d'impact ainsi sélectionné (ou la commande extrapolée qui correspond au point extrapolé ainsi déterminé) est ensuite appliquée comme commande pour la position cible théorique du marquage (sous forme d'une correction ΔZm).

En complément, une éventuelle correction pour tenir de la variation de longueur de chemin optique entre ce point cible théorique et le point d'impact de plus petit diamètre ou déterminé comme correspondant au « waist » peut également être mise en œuvre.

La détermination de cette correction se fait par exemple par référence à des abaques donnant cette correction de focalisation complémentaire en fonction de la mesure de la distance entre le point cible théorique et le point d'impact de plus petit diamètre ou déterminé comme correspondant au « waist ».

On comprend qu'un tel traitement est particulièrement facilité dans le cas où les points d'impact dessinent ensemble un motif de calibration matriciel. D'autres configurations de motifs de calibration sont bien entendu possibles.

Les mesures Xm et Ym sont ensuite traitées pour en déduire les valeurs de correction en bits ΔX et ΔY nécessaires au niveau du système S de commande de tête pour que le motif 15 soit, lors d'un tir de calibration suivant, centré sur la position cible 14.

De la même façon, la correction ΔZ à appliquer au module DFM pour corriger la focalisation est déterminée en fonction de Xm, Ym et ΔZm et remontée en bits audit module.

À titre d'ordre de grandeur, les galvanomètres de la tête trois axes sont typiquement commandés sur 24 bits (soit un guidage pour chacun des axes sur 2²⁴ bits), tandis que le pas en X, Y sur une grille de correction est réparti sur 4225 valeurs (pas de 262 144 bits). La commande Z est elle aussi commandée sur 24 bits, la table de correction ayant la même dimension que pour X et Y.

On notera en outre qu'un motif matriciel du type de celui proposé est particulièrement avantageux et permet une calibration de précision, tant quant à la position des points de tirs que quant à la focalisation du faisceau de rayonnement sur le lit de poudre. D'autres motifs sont néanmoins possibles (motifs matriciels avec répartition en quinconce, motifs circulaires, motifs elliptiques, etc.)

### Étapes de calibration

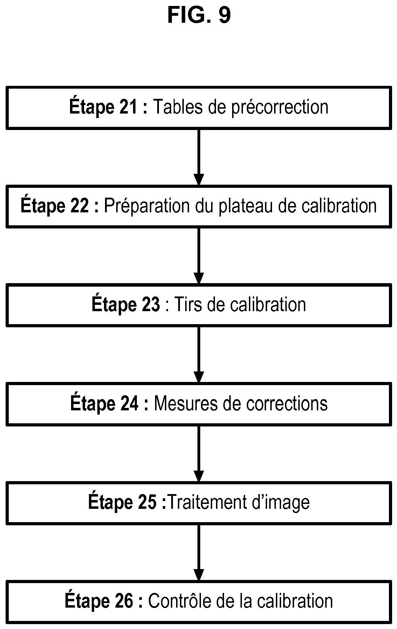

Dans une première étape (étape 21 sur la figure 9), des tables de précorrection selon les trois axes sont chargées dans le calculateur 13.

Ces tables sont préalablement obtenues à l'aide de modèles théoriques. Ceci permet d'éliminer en grande partie les défauts liés à la chaîne optique. Ainsi, il est possible de réaliser les tirs de calibration dans une zone très restreinte compatible avec le champ de vision de la caméra et avec une focalisation suffisante pour graver.

Dans une deuxième étape (étape 22), le plateau 7 est mis en place dans l'appareil de fabrication d'objets par impression sélective. Le plateau de calibration 7 est dimensionné pour permettre une mise en place aisée et directe sur le système de porte plateau dudit appareil.

Dans le deuxième mode de réalisation, le support de tir 8 est positionné sur le plateau de calibration 7.

Dans une troisième étape (étape 23), la source de faisceau et la tête sont commandées pour réaliser une succession de tirs de motifs sur différents points cibles théoriques 14. Dans le premier mode de réalisation, la succession de tirs est réalisée sur le plateau de référence 7. Dans le deuxième mode de réalisation, la succession de tirs est réalisée sur le support 8.

Les points cibles théoriques sont choisis pour correspondre à des points similaires à tout ou partie des repères de référence sur le plateau de calibration.

L'utilisation d'une matrice de points théoriques correspondant à la matrice de points utilisée pour une table de correction permet de limiter l'influence de la correction.

Le nombre de points de référence utilisés peut néanmoins être inférieur au nombre de points de la table de correction que l'on cherche à déterminer. Dans ce cas, les points manquants peuvent être extrapolés à partir des résultats relatifs aux points ciblés.

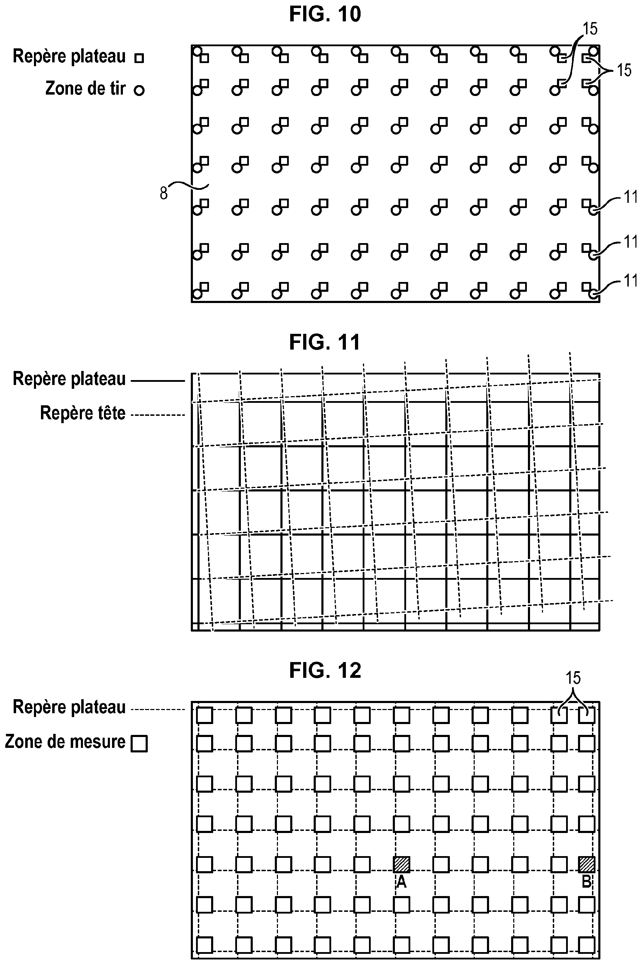

Dans le deuxième mode de réalisation, les tirs des motifs sont ciblés à 7,5 mm du plateau en Y pour tirer sur le matériau du support 8 et non pas sur les fenêtres 11, de façon à ce que les impacts soient apparents sur le support 8 et puisse être mesurés avec la caméra 9b (figure 10).

Dans une quatrième étape (étape 24 de la figure 9), l'équipement 9 de mesure est introduit dans l'appareillage d'impression sélective afin de réaliser les mesures optiques permettant les corrections.

Grâce au support 12 à deux axes, l'opérateur déplace manuellement ou à l'aide de moyens motorisés ledit équipement 9 pour acquérir successivement des images de l'ensemble des différents points de tir. Dans le premier mode de réalisation, les points de tir sont situés sur le plateau de référence 7. Dans le deuxième mode de réalisation, les points de tirs sont situés sur le support 8. On notera que le plateau de calibration 7 peut porter une numérotation au voisinage des différents repères de référence 10, de sorte que le balayage peut se faire sans qu'il y ait un ordre de mesure imposé sur les repères de référence.

Les images ainsi acquises peuvent être traitées en temps réel par le calculateur 13 (étape 25) ou stockées pour traitement ultérieur.

Les mesures et le traitement se font de la façon suivante.

L'analyse d'une image sur un repère de référence donné permet la détermination des coordonnées Xm et Ym du point au centre du motif de tir (milieu).

Elle permet également la détermination de la valeur de correction ΔZm.

Le positionnement mécanique de la tête par rapport au plateau de calibration 7 ne peut pas être assuré au micromètre, le calculateur 13 met en œuvre un traitement de changement de repère, qui permet de ramener les mesures dans le repère de la tête.

La figure 11 illustre de manière accentuée le décalage en translation et en rotation qui peut exister entre les deux repères.

Pour évaluer le décalage en translation, on utilise le centre (point milieu) d'un des motifs comme point de référence (point A sur la figure 12).

Ce point est préférentiellement choisi comme situé sous la tête de la source (coordonnées (0,0) en bits des galvanomètres commandant la tête en X et en Y).

Le traitement de l'image correspondant au repère de référence 10 permet au calculateur de déterminer la position Xm0 et Ym0 du point correspondant dans le repère du plateau et d'en déduire la correction en translation à appliquer aux mesures afin de les remonter dans le repère de la tête.

Pour évaluer le décalage en rotation, le calculateur 13 utilise les motifs correspondant au point A et à un deuxième point de tir (point B sur la figure 12) situé théoriquement sur la même ligne en X que le point A.

La commande du miroir Y étant nulle pour ces deux positions, le vecteur reliant ces deux points est donc l'horizontale du repère de tête.

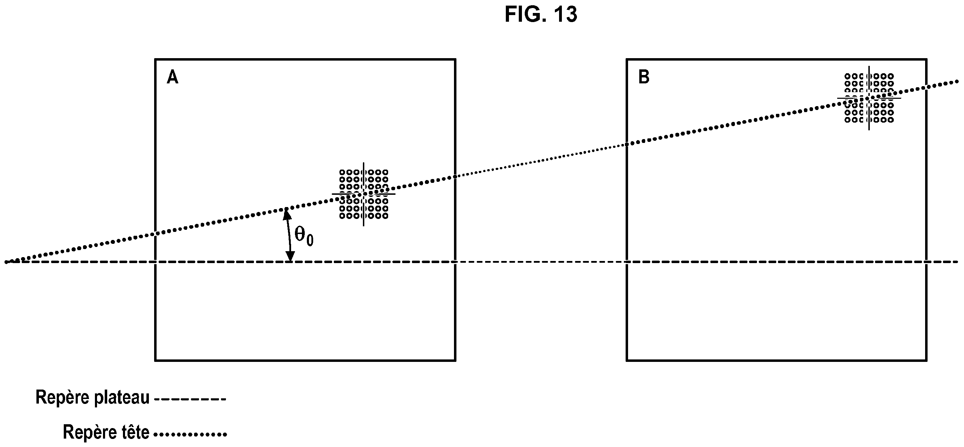

La position du point B dans le repère du plateau 7 permet au calculateur de déterminer l'angle θ0 entre le repère du plateau et le repère du système de tête S (figure 13).

À l'aide de ces paramètres, le calculateur 13 effectue le changement de repère recherché pour l'ensemble des images enregistrées.

Ainsi, pour chaque point de mesure de coordonnées Xm et Ym, il détermine les coordonnées correspondantes Xmt et Ymt dans le repère du système de tête.

Ces mesures sont ensuite traitées pour obtenir les valeurs de corrections en bits pour la commande (en X et en Y) des mouvements des deux miroirs.

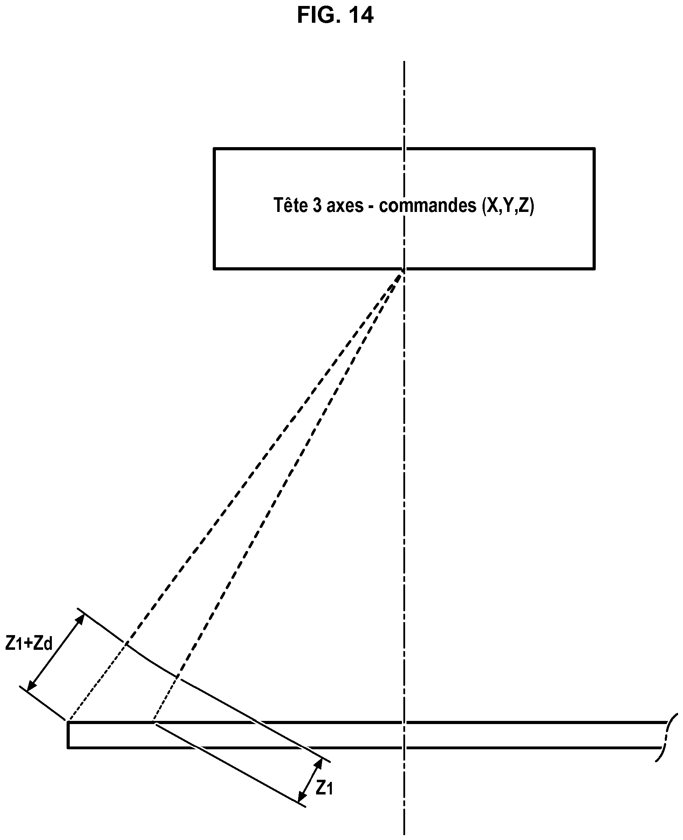

Cette correction en X et en Y engendre elle-même un déplacement du point d'impact sur le plateau 7 et donc une variation de focalisation (variation correspondant à Zd sur la figure 14). Le calculateur 13 estime cette variation Zd grâce aux lois optiques et détermine la valeur correspondante en bits galvanomètre (ΔZd).

Pour chaque motif 15 (c'est-à-dire pour chaque point de calibration), cette correction est additionnée à la valeur corrigée de commande en Z déterminée par le calculateur 13 pour le motif concerné, afin d'en déduire la bonne valeur de calibration en Z.

Lorsque les corrections sont établies, le calculateur 13 mémorise la nouvelle table de correction.

L'appareil est alors prêt pour un tir de contrôle (étape 26).

Dans le premier mode de réalisation, une fois la table de correction ainsi obtenue, le plateau de calibration 7 est retourné et l'opérateur déclenche une nouvelle séquence de tirs de contrôle. La position des impacts (motifs de tir) sur le plateau de calibration 7 est relevée et de nouvelles corrections sont déterminées par le calculateur 13.

Dans le deuxième mode de réalisation, une fois la table de correction ainsi obtenue, le support de tir 8 est retourné et l'opérateur déclenche une nouvelle séquence de tirs de contrôle. La position des impacts (motifs de tir) sur le support de tir 8 est relevée et de nouvelles corrections sont déterminées par le calculateur 13.

Un rapport de test peut le cas échéant être émis.

Si le test de contrôle fait ressortir une précision de positionnement et de focalisation insuffisante par rapport à la précision attendue, une nouvelle table de correction peut être calculée, suivie d'un nouveau tir de contrôle.

Le processus est ainsi itéré jusqu'à ce que la calibration soit considérée comme suffisante pour le respect des tolérances de positionnement attendues.

## Revendications

1. Procédé de calibration d'un système de tête d'une source de rayonnement de puissance d'un appareil de fabrication additive dans lequel, pour déterminer une correction à appliquer aux commandes dudit système, on met en œuvre les étapes suivantes :
- positionnement dans l'appareil de fabrication additive d'un plateau de calibration présentant une pluralité de repères de référence,
- commande de la source pour marquer sur le plateau de calibration au moins un motif de calibration formé de plusieurs points d'impact,
- acquisition d'au moins une image dudit motif de calibration et d'au moins un repère de référence,
- détermination d'au moins une commande corrigée en fonction de la ou des images ainsi obtenues,
**caractérisé en ce que** la détermination d'une commande corrigée met en œuvre une détermination sur une image acquise de la répartition des diamètres des points d'impact du motif de calibration qui apparait dans ladite image, ladite commande corrigée étant fonction de ladite répartition des diamètres des points d'impact et étant une commande de focalisation.

2. Procédé selon la revendication 1, dans lequel, lors de la commande de la source, différents tirs correspondant à différents points d'impact sont générés avec des commandes de focalisation différentes.

3. Procédé selon la revendication 2, dans lequel, lors de la commande de la source, différents tirs correspondant à différents points d'impact sont générés avec des commandes de focalisation incrémentées pour que les diamètres aient une répartition gaussienne autour du point milieu du motif.

4. Procédé selon l'une des revendications 2 ou 3, dans lequel la détermination de la commande de focalisation corrigée met en œuvre, en fonction de la répartition des diamètres des points d'impacts, une détermination d'un point d'impact de plus petit diamètre ou d'un point « waist » extrapolé.

5. Procédé selon la revendication 4, dans lequel la commande corrigée associée au point milieu d'un marquage est la commande de focalisation pour ledit point d'impact ainsi déterminé ou la commande extrapolée qui correspond audit point « waist » extrapolé.

6. Procédé selon l'une des revendications 1 ou 2, dans lequel le motif de calibration que forment les points d'impact est matriciel et la valeur de commande de focalisation augmente colonne après colonne et ligne après ligne.

7. Procédé selon l'une des revendications précédentes, dans lequel la source est commandée avec le système de tête pour réaliser sur le plateau de calibration un marquage d'une pluralité de motifs de calibration théoriquement centrés sur des points cibles théoriques prédéterminés.

8. Procédé selon la revendication 7, dans lequel lors de l'étape d'acquisition, un équipement de mesure optique est déplacé sur le plateau de calibration pour acquérir, pour chaque repère de référence du plateau de calibration, au moins une image d'une zone dans laquelle se trouve d'une part ledit repère de référence et d'autre part la position cible théorique à proximité immédiate.

9. Procédé selon la revendication 7 ou 8, dans lequel, pour chaque repère de référence, la ou les images acquises est/sont traitées pour en déduire la position du point d'impact de plus petit diamètre ou d'un point « waist » extrapolé dans un repère orthonormé dudit repère de référence et déterminer le décalage entre la position dudit point et la position cible théorique et dans lequel on détermine une correction complémentaire en fonction de ce décalage.

10. Procédé selon l'une des revendications précédentes, dans lequel pour la détermination d'une correction, on met en œuvre un traitement pour le passage d'un repère du plateau de calibration à un repère lié à la tête.

11. Procédé selon la revendication 10, dans lequel ledit traitement met en œuvre l'identification de motifs correspondants à deux repères de référence donnés sur le plateau de calibration et la détermination, à partir de ladite identification, d'un décalage en translation et d'une rotation angulaire entre le repère du plateau de calibration et un repère lié à la tête.

## Patentansprüche

1. Verfahren zur Kalibrierung eines Kopfsystems einer Leistungsstrahlungsquelle einer Vorrichtung zur additiven Fertigung, wobei zur Bestimmung einer Korrektur, die auf die Steuerungen des Systems anzuwenden sind, die folgenden Schritte durchgeführt werden:
- Positionieren, in der Vorrichtung zur additiven Fertigung, eines Kalibrierungsplateaus, das eine Mehrzahl von Referenz-Bezugspunkten aufweist,
- Steuern der Quelle, um auf dem Kalibrierungsplateau mindestens ein Kalibrierungsmotiv zu markieren, das von mehreren Auftreffpunkten gebildet ist,
- Erfassen mindestens eines Bildes des Kalibrierungsmotivs und mindestens eines Referenz-Bezugspunkts,
- Bestimmen mindestens einer korrigierten Steuerung in Abhängigkeit von dem oder den so erhaltenen Bildern,
**dadurch gekennzeichnet, dass** das Bestimmen einer korrigierten Steuerung ein Bestimmen, auf einem erfassten Bild, der Verteilung der Durchmesser der Auftreffpunkte des Kalibrierungsmotivs durchführt, das in dem Bild erscheint, wobei die korrigierte Steuerung von der Verteilung der Durchmesser der Auftreffpunkte abhängig ist und eine Fokussierungssteuerung ist.

2. Verfahren nach Anspruch 1, wobei beim Steuern der Quelle, verschiedene Schüsse, die verschiedenen Auftreffpunkten entsprechen, mit verschiedenen Fokussierungssteuerungen erzeugt werden.

3. Verfahren nach Anspruch 2, wobei beim Steuern der Quelle verschiedene Schüsse, die verschiedenen Auftreffpunkten entsprechen, mit inkrementierten Fokussierungssteuerungen erzeugt werden, damit die Durchmesser eine Gauß-Verteilung um den Mittelpunkt des Motivs aufweisen.

4. Verfahren nach einem der Ansprüche 2 oder 3, wobei das Bestimmen der korrigierten Fokussierungssteuerung in Abhängigkeit von der Verteilung der Durchmesser der Auftreffpunkte ein Bestimmen eines Auftreffpunkts mit kleinstem Durchmesser oder eines extrapolierten "Waist"-Punkts durchführt.

5. Verfahren nach Anspruch 4, wobei die korrigierte Steuerung, die dem Mittelpunkt einer Markierung zugeordnet ist, die Fokussierungssteuerung für den so bestimmten Auftreffpunkt oder die extrapolierte Steuerung, die dem extrapolierten "Waist"-Punkt entspricht, ist.

6. Verfahren nach einem der Ansprüche 1 oder 2, wobei das Kalibrierungsmotiv, das die Auftreffpunkte bilden, ein matriziell ist und der Fokussierungssteuerungswert Spalte für Spalte und Zeile für Zeile zunimmt.

7. Verfahren nach einem der vorhergehenden Ansprüche, wobei die Quelle mit dem Kopfsystem gesteuert wird, um auf dem Kalibrierungsplateau eine Markierung einer Mehrzahl von Kalibrierungsmotiven auszubilden, die theoretisch auf vorbestimmte theoretische Zielpunkte zentriert sind.

8. Verfahren nach Anspruch 7, wobei beim Schritt des Erfassens eine optische Messeinrichtung auf dem Kalibrierungsplateau bewegt wird, um für jeden Referenz-Bezugspunkt des Kalibrierungsplateaus, mindestens ein Bild eines Bereichs zu erfassen, in dem sich einerseits der Referenz-Bezugspunkt und andererseits die theoretische Zielposition in unmittelbarer Nähe befindet.

9. Verfahren nach Anspruch 7 oder 8, wobei für jeden Referenz-Bezugspunkt das oder die erfassten Bilder verarbeitet wird/werden, um daraus die Position des Auftreffpunkts mit kleinstem Durchmesser oder eines extrapolierten "Waist"-Punkts in einem orthonormierten Bezugspunkt des Referenz-Bezugspunkts abzuleiten und den Versatz zwischen der Position des Punkts und der theoretischen Zielposition zu bestimmen, und wobei eine ergänzende Korrektur in Abhängigkeit von diesem Versatz bestimmt wird.

10. Verfahren nach einem der vorhergehenden Ansprüche, wobei zur Bestimmung einer Korrektur eine Verarbeitung für den Wechsel eines Bezugspunkts des Kalibrierungsplateaus zu einem Bezugspunkt, der mit dem Kopf verbunden ist, durchgeführt wird.

11. Verfahren nach Anspruch 10, wobei die Verarbeitung die Identifikation von Motiven, die zwei bestimmten Referenz-Bezugspunkten auf dem Kalibrierungsplateau entsprechen, und die Bestimmung, ausgehend von der Identifikation, eines Translationsversatzes und einer Winkeldrehung zwischen dem Bezugspunkt des Kalibrierungsplateaus und einem Bezugspunkt, der mit dem Kopf verbunden ist, durchführt.

## Claims

1. Method for calibrating a head system of a power radiation source of an additive manufacturing apparatus in which, to determine a correction to be applied to the commands of said system, the following steps are implemented:
- positioning in the additive manufacturing apparatus a calibration plate comprising a plurality of reference marks,
- commanding the source to mark on the calibration plate at least one calibration pattern formed of a plurality of impact points,
- acquiring at least one image of said calibration pattern and of at least one reference mark,
- determining at least one corrected command depending on the one or more images thus obtained,
**characterized in that** the step of determining a corrected command determines, in an acquired image, the distribution of the diameters of the impact points of the calibration pattern that appears in said image, said corrected command being dependent on said distribution of the diameters of the impact points and being a focus command.

2. Method according to Claim 1, wherein, in the step of commanding the source, various shots corresponding to various impact points are generated with different focus commands.

3. Method according to Claim 2, wherein, in the step of commanding the source, various shots corresponding to various impact points are generated with focus commands that are incremented so that the diameters a Gaussian distribution about the midpoint of the pattern.

4. Method according to either of Claims 2 and 3, wherein the step of determining the corrected focus command determines, depending on the distribution of the diameters of the impact points, an impact point of smallest diameter or an extrapolated waist point.

5. Method according to Claim 4, wherein the corrected command associated with the midpoint of a marking is the focus command for said impact point thus determined or the extrapolated command that corresponds to said extrapolated waist point.

6. Method according to either of Claims 1 and 2, wherein the calibration pattern that the impact points form is a matrix array and the focus command value increases column after column and row after row.

7. Method according to one of the preceding claims, wherein the source is commanded with the head system in order to produce, on the calibration plate, a marking of a plurality of calibration patterns that are theoretically centred on preset theoretical target points.

8. Method according to Claim 7, wherein, in the acquiring step, an optical measurement device is moved over the calibration plate in order to acquire, for each reference mark of the calibration plate, at least one image of a zone in which are found on the one hand said reference mark and on the other hand the theoretical target position in immediate proximity.

9. Method according to Claim 7 or 8, wherein, for each reference mark, the one or more acquired images are processed in order to deduce therefrom the position of the impact point of smallest diameter or of an extrapolated waist point in an orthonormal coordinate system of said reference mark and to determine the offset between the position of said point and the theoretical target position and wherein a complementary correction is determined depending on this offset.

10. Method according to one of the preceding claims, wherein, to determine a correction, processing is implemented to pass from a coordinate system of the calibration plate to a coordinate system attached to the head.

11. Method according to Claim 10, wherein said processing identifies patterns corresponding to two given reference marks on the calibration plate and determines, from said identification, a translational offset and an angular rotation between the coordinate system of the calibration plate and a coordinate system attached to the head.
